# EUROPEAN PATENT APPLICATION

(11) **EP 3 045 341 A1**
(43) Date of publication of application: **20.07.2016**
(21) Application number: 16151543.2
(22) Date of filing: 15.01.2016
(51) Int. Cl.: B60K 35/00, B60K 37/02, F21V 8/00

(54) **INDICATOR GAUGE IN RING**

(30) Priority: 16.01.2015 US 201562104370 P; 14.01.2016 US 201614995577
(71) Applicant: Yazaki North America, Inc., Canton, Michigan 48187 (US)
(72) Inventor: Hopersberger, Joshua Joseph, CANTON, MI Michigan 48187 (US); Hamalainen, Evan Joseph, CANTON, MI Michigan 48187 (US); McDade, Craig Allan, CANTON, MI Michigan 48187 (US); Boyd, Michael Ray, CANTON, MI Michigan 48187 (US)
(74) Representative: Kransell & Wennborg KB

(57) **Abstract**

An indicator gauge assembly (100) includes at least one primary indicator gauge (110), a trim member (120) substantially surrounding the at least one primary indicator gauge, and at least one auxiliary indicator gauge (130) arranged within the trim piece member. The trim member can include an opaque portion and a transparent portion. The at least one auxiliary indicator gauge can be arranged within the transparent portion.

## Description

### FIELD

The present disclosure relates to an indicator gauge assembly for a vehicle, and more particularly, to an indicator gauge assembly that includes a primary gauge and an auxiliary gauge integrated within a trim ring surrounding the primary gauge.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

A vehicle can have one or more indicator gauges, e.g., a speedometer, a tachometer, a fuel gauge, and a battery charge gauge, arranged within an indicator gauge assembly of a dashboard of a vehicle. These indicator gauges can be configured to display information regarding the operation and status of the vehicle to the occupants of the vehicle. As vehicles become more complex and sophisticated, it may be desirable to provide a large amount of information to the occupants. In some cases, vehicles are being designed to include large displays (Liquid Crystal Displays (LCDs), touchscreens, and the like) to display information to the occupants of the vehicle. There may be, however, a limited amount of available space within a dashboard to include indicator gauges while also maintaining a clean and functional design, especially when a large display is included in the design.

### SUMMARY

In various embodiments of the present disclosure, an indicator gauge assembly is disclosed. The indicator gauge assembly can include at least one primary indicator gauge, a trim member substantially surrounding the at least one primary indicator gauge, and at least one auxiliary indicator gauge arranged within the trim piece member. The trim member can include an opaque portion and a transparent portion. The at least one auxiliary indicator gauge can be arranged within the transparent portion.

Further areas of applicability of the present disclosure will become apparent from the detailed description provided hereinafter. It should be understood that the detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is a perspective view of an example indicator gauge assembly according to some aspects of the present disclosure;
FIG. 2 is a front view of a portion of the example indicator gauge assembly of FIG. 1;
FIG. 3 is an exploded view of the example indicator gauge assembly of FIG. 1;
FIG. 4 is a partial exploded view of a portion of the example indicator gauge assembly of FIG. 1; and
FIG. 5 is a sectional view of a portion of the example indicator gauge assembly of FIG. 1.

### DETAILED DESCRIPTION

As previously discussed, it may be desirable to provide a large amount of information to the occupants of a vehicle. Further, vehicle manufacturers are increasingly adding more and larger displays, LCDs, and other forms of indicator gauges to their designs. As larger-sized, and a larger number of, indicator gauges are being added to vehicle designs, it is becoming increasingly important to maximize the utility of the limited amount of available space (e.g., within a dashboard) in which such indicator gauges may be integrated, while also providing an aesthetically pleasing and efficient design. Therefore, it may be desirable to provide an improved indicator gauge assembly that addresses these and other disadvantages of the presently used designs.

Accordingly, an indicator gauge assembly that addresses one or more of the above identified disadvantages is presented. The indicator gauge assembly includes at least one primary indicator gauge, a trim member substantially surrounding the primary indicator gauge, and at least one auxiliary indicator gauge that is arranged within the trim member. Further details of the presented indicator gauge are provided below.

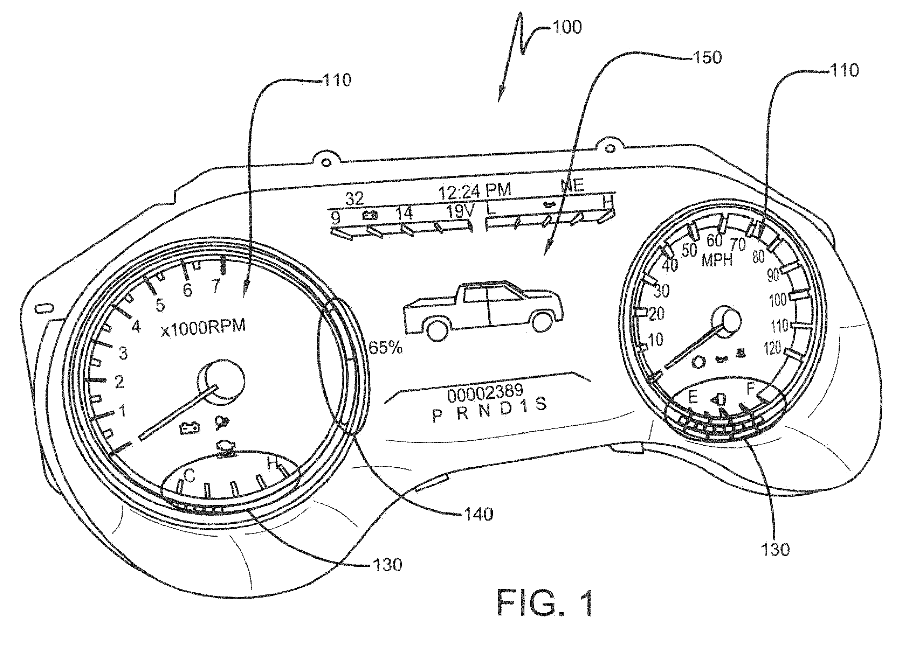

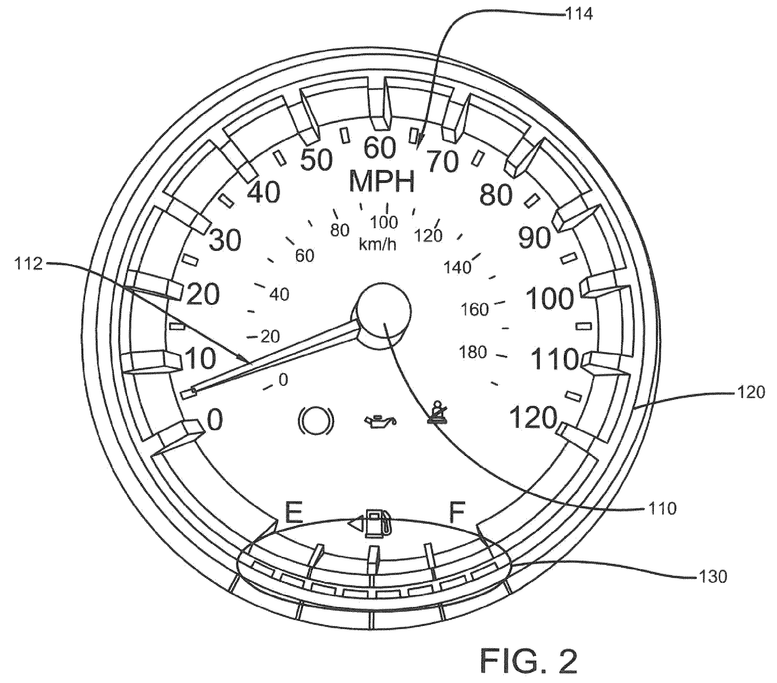

Referring now to FIGs. 1 and 2, an indicator gauge assembly 100 can include one or more primary indicator gauges 110. One or more trim members 120 can also be included in the indicator gauge assembly 100. Each of the trim members 120 can substantially surround a primary indicator gauge 110. In the illustrated example, the trim member 120 is a trim ring that fully surrounds the primary indicator gauge 110, although other forms of the trim member 120 are contemplated and within the scope of the present disclosure. The indicator gauge assembly 100 can further include one or more auxiliary indicator gauges 130, 140, as further described below. In some aspects, the indicator gauge assembly 100 can also include a display 150, such as a Liquid Crystal Display (LCD). The indicator gauge assembly 100 can, e.g., be arranged within a dashboard or similar structure (not shown) of a vehicle (also not shown).

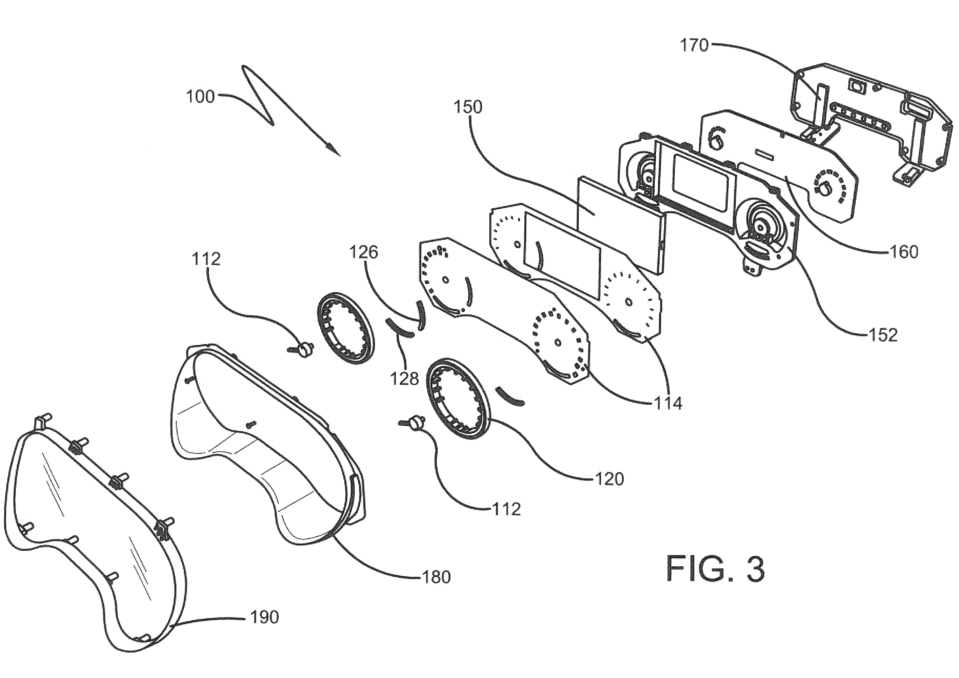

With particular reference to FIGs. 2 and 3, the primary indicator gauge 110 can be an analog gauge, such as the speedometer shown in FIG. 2, but other types of indicator gauges are within the scope of the disclosure (such as a tachometer as shown in FIG. 1). The auxiliary indicator gauge 130 is shown as a fuel gauge that indicates the amount of fuel within the vehicle. The primary indicator gauge 110 can include a pointer 112 and a dial member 114. The dial member 114 can be composed of one or more layers (two layers are illustrated in FIG. 3) and include a plurality of numerical or other indicators. The primary indicator gauge 110 can be illuminated, e.g., by being backlit by an illumination source (not shown). In some aspects, the dial member 114 and the pointer 112 are both illuminated in certain operating conditions of the vehicle.

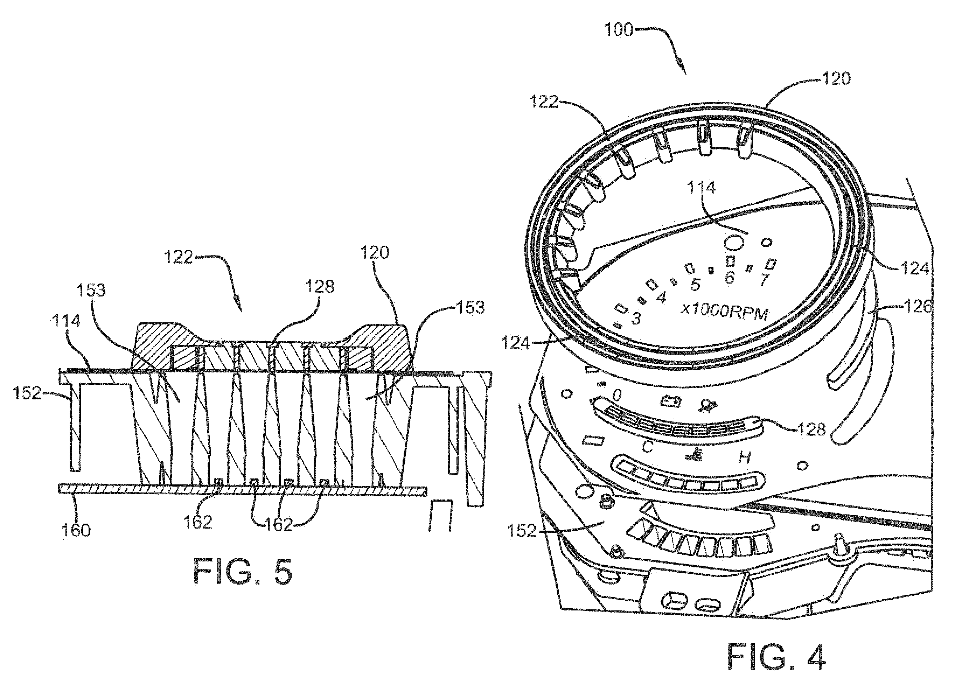

With continuing reference to FIG. 3, an exploded view of an example indicator gauge assembly 100 according to some aspects of the present disclosure is illustrated. In addition to the components described above, the indicator gauge assembly 100 can further include a display support member 152, a printed circuit board (PCB) 160, an assembly support member 170, a shade member 180, and a shield 190. The display support member 152 can provide mechanical support for, and/or electrical connections to, the display 150. The PCB 160 can provide for electrical connections to the remaining components of the indicator gauge assembly 100. As further described below with reference to FIG. 5, the PCB 160 can provide a mounting arrangement for one or more light emitting diodes (LEDs) 165 utilized with the auxiliary indicator gauge 130. A housing or shade member 180 and/or shield 190 can optionally be included in the indicator gauge assembly 100 to provide proper offset, reduction of glare from external light, and/or protection from manual interference with the indicator gauges.

Referring now to FIGs. 4 and 5, the trim member 120 can include an opaque portion 122 and a transparent portion 124. The opaque portion 122 can inhibit light transmission, obscure, and/or block light, e.g., from the dial member 114. Conversely, the transparent portion 124 can permit light to be transmitted from behind the trim member 120 to illumination. It should be appreciated that the transparent portion 124 need not be completely transparent in the sense of being clear, but instead can be translucent, partially opaque, etc. so long as light is permitted to be transmitted through the transparent portion 124, whether the light is diffused or otherwise. In some aspects, the transparent portion 124 comprises a light guide 126, 128 arranged within an aperture defined by the trim member 120.

The auxiliary indicator gauge 130 can include a light source that is at least partially arranged within the trim member 120. The light source can include one or more light guides 126, 128, and/or one or more LEDs 165,

With particular reference to FIG. 5, a plurality of LEDs 162 can be coupled to, arranged upon, etc. the PCB 160. The display support member 152 can define a corresponding plurality of light channels through which light emitted by the LEDs can travel. When illuminated, the LEDs 162 can transmit light through the light channels 153 and into a light guide 128. In some aspects, the light guide 128 reflects a portion of the light transmitted from the LEDs, thereby illuminating the light guide 128 in the appropriate areas. The light guides 126, 128 can be constructed of any known translucent materials, specifically including but not limited to ulexite ("TV rock") or similar material.

As shown in FIG. 4, the light guide 128 can comprise a plurality of individual light transmitting members arranged within a support structure. In this manner, the support structure can divide the light guide 128 into discrete portions for illumination and reduce/eliminate "cross-talk" between the LEDs when illuminated. In an alternative aspect, the light guide 126 can be constructed of a single light transmitting element. It should be appreciated that the light guide 126 can be constructed with a lower diffusion rate than the light guide 128 such that discrete portions of the light guide 126 can be separately illuminated from other portions.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known procedures, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The term "and/or" includes any and all combinations of one or more of the associated listed items. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An indicator gauge assembly for a vehicle, comprising:
at least one primary indicator gauge;
a trim member substantially surrounding the at least one primary indicator gauge; and
at least one auxiliary indicator gauge arranged within the trim member.

2. The indicator gauge assembly of claim 1, wherein the trim member is a ring.

3. The indicator gauge assembly of claim 1, wherein the trim member comprises:
an opaque portion; and
a transparent portion,
wherein the at least one auxiliary indicator gauge is arranged within the transparent portion.

4. The indicator gauge assembly of claim 4, wherein the transparent portion comprises a light guide arranged within an aperture defined by the trim member.

5. The indicator gauge assembly of claim 1, wherein the at least one auxiliary indicator gauge comprises:
a plurality of light emitting diodes (LEDs); and
a light guide arranged within the trim member,
wherein the plurality of LEDs are configured to transmit light to the light guide.

6. The indicator gauge assembly of claim 1, wherein the at least one primary indicator gauge is an analog gauge.

7. An indicator gauge assembly for an instrument panel of a vehicle, comprising:
a display configured to display information corresponding to operation of the vehicle;
at least one primary indicator gauge;
a trim ring substantially surrounding the at least one primary indicator gauge, the trim ring including an opaque portion configured to inhibit light transmission and a transparent portion configured to permit light transmission; and
at least one auxiliary indicator gauge arranged within the trim ring, the at least one auxiliary indicator gauge comprising a light source at least partially arranged within the transparent portion of the trim ring.

8. The indicator gauge assembly of claim 7, wherein the light source further comprises a light guide constructed of translucent material.

9. The indicator gauge assembly of claim 8, wherein the light source comprises one or more light emitting diodes (LEDs).

10. The indicator gauge assembly of claim 9, further comprising a display support member defining a plurality of light channels, wherein the display is coupled with the display support member, the trim ring is arranged on the display support member, and the plurality of light channels are configured to transmit light from the one or more LEDs to the light guide.

11. The indicator gauge assembly of claim 7, further comprising a display support member defining a plurality of light channels, wherein the display is coupled with the display support member, the trim ring is arranged on the display support member, and the plurality of light channels are configured to transmit light from the light source.

12. The indicator gauge assembly of claim 7, wherein the display comprises a Liquid Crystal Display.

13. The indicator gauge assembly of claim 7, wherein the transparent portion of the trim ring comprises an aperture defined within the trim ring.

14. The indicator gauge assembly of claim 7, further comprising a printed circuit board that provides electrical connections to light source.

15. The indicator gauge assembly of claim 7, wherein the at least one primary indicator gauge is an analog gauge.
